**Europäisches Patentamt**

**European Patent Office**

**Office européen des brevets**

(19)

(11) Veröffentlichungsnummer: **0 291 822**

**A1**

# EUROPÄISCHE PATENTANMELDUNG

(12)

(21) Anmeldenummer: **88107484.3**

(22) Anmeldetag: **10.05.88**

(51) Int. Cl.⁴: **F16L 55/16**

(30) Priorität: **20.05.87 DE 3716918**

(43) Veröffentlichungstag der Anmeldung:
**23.11.88 Patentblatt 88/47**

(84) Benannte Vertragsstaaten:
**AT CH DE FR GB IT LI NL SE**

(71) Anmelder: **Vetter, Manfred**
**Burg Langendorf**
**D-5352 Zülpich-Langendorf(DE)**

(72) Erfinder: **Vetter, Manfred**
**Burg Langendorf**
**D-5352 Zülpich-Langendorf(DE)**

(74) Vertreter: **Bauer, Wulf, Dr.**
**Wolfgang-Müller-Strasse 12**
**D-5000 Köln 51 (Marienburg)(DE)**

(54) **Leckdichtkissen zum Abdichten schadhafter Wände von Behältern und Rohren.**

(57) Das Leckdichtkissen zum Abdichten schadhafter Wände von Behältern und Rohren ist aus in einer Presse heißvulkanisiertem, armiertem Gummimaterial gefertigt, es hat eine leckseitige Kissenwand (20) und eine gleich große, leckabgewandte Kissenwand (22), die randseitig miteinander in Verbindung stehen und einen luftdichten Innenraum (24) begrenzen, der über einen Nippel (26) von außen zugänglich ist. An zwei gegenüberliegenden Randbereichen (Schmalseiten 28) sind Befestigungsteile (30, Schlaufen 54, Brücke 64) für eine den Behälter bzw. das Rohr umgreifende Spanneinrichtung vorgesehen. Beide Kissenwände (20, 22) haben eine innenliegende Armierung mit sich kreuzenden, biegsamen Armierungsfäden (34, 36; 40, 42). Die leckseitige Kissenwand (20) ist ausschließlich mit schräg zu den Rechteckseiten (28, 38) des Kissens verlaufenden Armierungsfäden (34, 36) armiert, die leckabgewandte Kissenwand (22) hat parallel zu den Rechteckseiten (28, 38) verlaufende Armierungsfäden (40, 42).

FIG. 1

Xerox Copy Centre

## Leckdichtkissen zum Abdichten schadhafter Wände von Behältern und Rohren

Die Erfindung bezieht sich auf ein Leckdichtkissen zum Abdichten schadhafter Wände von Behältern und Rohren. Das Leckdichtkissen hat Reckteckform und ist aus in einer Presse heißvulkanisiertem, armierten, bahnförmigen, vor dem Vulkanisieren unvulkanisiertem Material gefertigt. Es hat eine leckseitige Kissenwand und eine gleich große, leckabgewandte Kissenwand, die randseitig miteinander in Verbindung stehen und dabei einen luftdichten Innenraum begrenzen, der über einen Nippel von außen zugänglich ist. Weiterhin sind an zwei gegenüberliegenden Randbereichen Befestigungsteile (Haken, Ösen, Schlaufen usw.) für eine den Behälter bzw. das Rohr umgreifende Spanneinrichtung vorgesehen.

Mit Hilfe derartiger Leckdichtvorrichtungen können schadhaft gewordene Behälter oder Rohre einfach und mit geringem Aufwand abgedichtet werden. Die Vorrichtungen eignen sich vorzugsweise zum vorübergehenden Abdichten von Leckstellen, die durch Unfälle oder dergleichen entstanden sind. Zweck ist es dabei, das Auslaufen gefährlicher Stoffe aus schadhaft gewordenen Behältern oder Rohren in möglichst kurzer Zeit zu stoppen um Folgeschäden - insbesondere Umweltverschmutzung oder Explosion - so gering wie möglich zu halten.

Bei dem aus der DE-PS 27 45 506 vorbekannten Vorrichtung zum Abdichten schadhafter Wände der eingangs genannten Art ist ein aufblasbares Kissen aus zwei aneinander vulkanisierten und armierten Gummi- oder Kautschukwänden an einer Seite einer flexiblen Gegenplatte angeordnet. Diese hat wie das Kissen die Form eines Rechtecks, ist jedoch größer als das aufblasbare Kissen. In gegenüber diesem überstehenden, einander genüberliegenden Schmalseiten sind Metallstäbe eingebettet, mittels derer die Befestigungsteile ausgebildet werden. In der Mitte der leckabgewandten Kissenwand ist als Nippel ein Ventil angeordnet, das durch eine Öffnung der Gegenplatte ragt und dadurch von außen zugänglich ist.

Die biegsame Gegenplatte ist durch im wesentlichen rechtwinklig zu den Metallstäben verlaufende Längsarmierungen verstärkt, die um die Metallstäbe herumgelegt sind. Im Vergleich zu einer starren Gegenplatte, wie sie beispielsweise aus der Abdichtvorrichtung nach dem DE-GM 19 20 243 vorbekannt ist, hat die flexible Gegenplatte den Vorteil, daß sie weitgehend der Krümmung des - schadhaften Behälters oder Rohres angepaßt werden kann. Dadurch wird das Kissen auf seiner gesamten Fläche im wesentlichen gleichmäßig angedrückt, die Leckdichtvorrichtung läßt sich universell und weitgehend ohne Beschränkung auf spezielle Durchmesserbereiche oder Formen des abzudichtenden Behälters bzw. Rohres einsetzen. Die Gegenplatte ist in Armierungsrichtung praktisch nicht dehnbar, sie bewirkt, daß das unter ihr befindliche Kissen im wesentlichen gleichmäßig und auf seiner gesamten Fläche gegen die abzudichtende Wand gepreßt wird. Zugleich wird eine lokale und übermäßige Ausdehnung des Kissens vermieden. Der Hub, den das Kissen ausführen muß, bleibt relativ gering. Dies verhindert wiederum die Gefahr, daß die schadhafte Wand im Bereich des Lecks eingedrückt wird.

Nachteilig bei dieser vorbekannten Leckdichtvorrichtung ist die etwas umständliche Herstellung der eigentlichen Leckdichtanordnung aus einer Gegenplatte und einem aufblasbaren Kissen. Die Armierung der Gegenplatte in nur einer Richtung, nämlich der Zugrichtung der Spannmittel, bringt Nachteile, weil die Gegenplatte in Querrichtung hierzu wegen der fehlenden Armierung stärker dehnbar ist, es kcmmt dadurch zu Ungleichmäßigkeiten im Ausdehnverhalten. Die Herstellung der Leckdichtanordnung aus zwei separaten Teilen ist aufwendig, durch diese Herstellung ist auch das Gewicht höher.

Ausgehend von dem vorbekannten Leckdichtkissen der eingangs genannten Art ist es Aufgabe der Erfindung, die Nachteile dieses Leckdichtkissens zu vermeiden und das Leckdichtkissen dahingehend weiterzuentwickeln, daß Gegenplatte und Kissen schon im Anfangsstadium der Herstellung einstückig zusammenhängen und daß die leckzugewandte Kissen wand bei vorgegebener Armierung möglichst nachgiebig ist und beim Aufblasen ausbeulen kann, während die leckabgewandte Kissenwand aufgrund ihrer Armierung und trotz ihrer Biegsamkeit möglichst beim Aufblasen nicht deformiert werden kann.

Diese Aufgabe wird ausgehend von dem vorbekannten Leckdichtkissen dadurch gelöst, daß beide Kissenwände eine innenliegende Armierung aus in zwei sich kreuzenden Richtungen verlaufenden, biegsamen und linearen Armierungselementen (Polyamid, Polyester, Aramid oder dergleichen) haben, daß die Armierungsfäden der leckseitigen Kissenwand im Winkel von 30 Grad bis 45 Grad zu den Rechteckseiten, vorzugsweise in Diagonalrichtung, armiert ist und daß die leckabgewandte Kissenwand eine parallel zu den Rechteckseiten verlaufende Armierung aufweist.

Aufgrund ihrer schräg zu den Rechteckseiten verlaufenden Armierung aus sich kreuzenden Armierungsfäden ist die leckseitige Kissenwand relativ dehnbar, sie kann sich beim Füllen des Kissens mit Druckluft bevorzugt ausbeulen, hierdurch wird wiederum eine gute Anlage an den Randbereich eines Lecks erzielt. Die Armierung selbst sichert aber eine ausreichende Festigkeit dieser Kissenwand, so daß das Leckdichtkissen auch im freien Zustand bei Nenndruck mit Luft gefüllt werden kann, ohne zu bersten. Zudem verhindert die Armierung eine lokale Ausbeulung der leckseitigen Kissenwand im Bereich der Fläche des Leckbereichs, wodurch wiederum auch ein Einschneiden dieser Kissenwand an eventuell scharfkantigen Rändern der Leckstelle vermieden wird.

Durch die parallel zu den Rechteckseiten verlaufende Armierung der leckabgewandten Kissenwand wird im Gegensatz zur leckzugewandten Kissenwand eine möglichst geringe Dehnbarkeit und Ausbeulung der leckabgewandten Kissenwand erzielt. Es wird also in beiden Kissenwänden jeweils das lineare Armierungsmaterial optimal eingesetzt, bei der leckseitigen Kissenwand im Sinne einer größtmöglichen Dehnbarkeit bzw. Ausbeulfähigkeit, bei der leckabgewandten Kissenwand dagegen im Sinne einer möglichst geringen Dehnbarkeit. Auf diese Weise beult sich das erfindungsgemäße Leckdichtkissen bei Luftfüllung auch im freien Zustande ungleichmäßig aus, die leckzugewandte Kissenwand beult sich wesentlich stärker aus als die leckabgewandte Kissenwand.

Aufgrund der gezielten Anordnung der Armierungen in den beiden Kissenwänden wird bei geringem Materialeinsatz und damit geringem Gewicht eine für ein Leckdichtkissen günstige Ausbildung erreicht, die eine verbesserte Biegsamkeit des gesamten Kissens und damit Anpassung an beliebige Formen der abzudichtenden Wände ermöglicht, ein verbessertes Abdichtverhalten gibt und preisgünstiger herzustellen ist.

In Weiterbildung der Erfindung wird vorgeschlagen, die leckabgewandte Kissenwand zusätzlich zur Armierungsrichtung parallel zu den beiden Rechteckseiten auch in Diagonalrichtung zu armieren. Hierdurch wird eine noch höhere Festigkeit dieser Kissenwand gegen Dehnung erreicht und zugleich ermöglicht, das Leckdichtkissen aus im wesentlichen zwei zuschnitten herzustellen: Ein Zuschnitt aus in Diagonalrichtung armiertem, bahnförmigen Material hat eine Lange, die nicht kleiner ist als die doppelte Gesamtlänge des Leckdichtkissens und eine Breite, die abgesehen von umzuschlagenden Laschen im wesentlichen der Breite des Kissenrechtecks entspricht. Dieser Zuschnitt wird quer zu seiner Längsrichtung zweimal gefaltet, wobei die Endbereiche, die zusammenstoßen oder überlappen, sich im Bereich der leckabgewandten Kissenwand befinden. Diese wird dann zusätzlich durch einen zweiten Zuschnitt mit im wesentlichen den Abmessungen des Kissenrechtecks vervollständigt. Auf diese Weise bildet der erste Zuschnitt eine luftdichte Blase, wobei möglichst wenige Verbindungsbereiche notwendig sind. Der zweite Zuschnitt verstärkt den Überlappungs- bzw. Stoßbereich der kurzen Seiten des ersten Zuschnitts. Ein derartiges Leckdichtkissen läßt sich günstig herstellen, hat ein relativ geringes Gewicht, ist aufgrund seiner Konstruktion sicher und flexibel in Querrichtung zu den Kissenwänden, so daß es sich gut an unterschiedliche Wandformen anpaßt.

In vorteilhafter Weiterbildung befindet sich der Nippel in einer Kissenecke. Die Kissenecke deformiert sich beim Aufblasen wesentlich geringer als die Mitte einer Kissenseite. Bei dem vorbekannten Leckdichtkissen ist ein als Ventil ausgebildeter Nippel in der Mitte der leckabgewandten Kissenseite, also im Bereich der größten Deformation beim Aufblasen, angeordnet. Die vorgeschlagene Anordnung des Nippels in der Ecke bietet größere Funktionssicherheit, höhere Dauerstandsfestigkeit und im allgemeinen ausreichend bequemen Zugang zum Nippel.

Weiterhin wird vorgeschlagen, die Befestigungsteile in Form von Schlaufen auszubilden, die über die benachbarten Randbereiche hinausragen und aus in Längsrichtung armierten Streifen gebildet sind, die an beiden Endseiten zur Bildung von Schlaufen eingeschlagen sind und mit der leckabgewandten Kissenwand beim Vulkanisieren verbunden sind. Durch zwei derartige, im Abstand voneinander und parallel zu einer Rechteckseite angeordnete Streifen werden an zwei gegenüberliegenden Randbereichen jeweils zwei Schlaufen ausgebildet. Der seitlich neben ihnen bleibende Platz wird durch gleichstarke Gummizuschnitte ausgeglichen, so daß die Oberfläche der leckabgewandten Kissenwand glatt ist. Derartige als Schlaufen ausgebildete Befestigungsteile sind biegsam in Querrichtung zu ihrer Armierungsrichtung und können sich daher dem jeweiligen Einsatzzweck entsprechend ausrichten. Die Zugkräfte werden unmittelbar von einer Schlaufe zur gegenüberliegenden, aus dem gleichen Streifen hergestellten Schlaufe weitergeleitet, so daß die Armierung der leckabgewandten Kissenwand geringer belastet ist. Schließlich spart diese Konstruktion Gewicht, was sich im Gesamtgewicht des Leckdichtkissens günstig niederschlägt.

Daneben sind andere Ausbildungen der Befestigungsteile möglich: Wie im vorbekannten Leckdichtkissen können Metallstäbe in gegenüberliegenden Randbereichen eingelegt sein. In Weiterbildung der Erfindung wird für diese Ausbildung vorgeschlagen, in den Metallprofilen Gewindebohrungen vorzusehen, die in der Kissenebene verlaufen und das Einschrauben von Haken oder dergleichen ermöglichen. Schließlich wird in einer weiteren Alternative vorgeschlagen, auf der Oberseite der leckabgewandten Kissenwand mehrere quer zur Richtung der Spannmittel verlaufende Brücken anzuordnen, die Spannmittel werden zwischen diesen Brücken und der Oberseite der leckabgewandten Kissenwand hindurchgeführt. Die Brücken sichern die Spannmittel lediglich gegen seitliches Verrutschen. Die Spannmittel bilden eine vollständig geschlossene Ringschlaufe um den abzudichtenden Behälter bzw. um das Rohr, die leckabgewandte Kissen wand wird auf diese Weise nicht - wie bei den bisher besprochenen Ausführungen - als Teil der geschlossenen Schlaufe der Spannmittel eingesetzt, sondern wird selbst nicht in Richtung der Spannmittel gestreckt oder gezogen. Das Leckdichtkissen kann dadurch gezielter auf seine Hauptfunktion, nämlich Leckabdichtung, ausgebildet werden, eine Zugfestigkeit des Leckdichtkissens im Sinne einer Aufnahme der Spannkräfte muß konstruktiv nicht mehr berücksichtigt werden. Hierdurch wird das Leckdichtkissen leichter, seine Biegsamkeit quer zur Rechteckfläche des Kissens wird verbessert, die Herstellung vereinfacht.

Weitere Vorteile und Merkmale der Erfindung ergeben sich aus den übrigen Ansprüchen sowie der nun folgenden Beschreibung einzelner, nicht einschränkend zu verstehender Ausführungsbeispiele der Erfindung, die unter Bezugnahme auf die Zeichnung näher erläutert werden. In dieser Zeigen:

Fig. 1 einen perspektivischen Längsschnitt durch ein Leckdichtkissen mit randseitig überstehenden Schlaufen als Befestigungsmittel,

Fig. 2 ein perspektivisches Montagebild eines Leckdichtkissens ähnlich Fig. 1,

Fig. 3 eine perspektivische Darstellung eines quer aufgeschnittenen Leckdichtkissens und

Fig. 4 eine Draufsicht auf die leckabgewandte Kissenwand eines Leckdichtkissens mit Brücken für die Führung der als Seile ausgebildeten Spannmittel.

Das Leckdichtkissen wird aus armierten, bahnförmigen, unvulkanisierten Zuschnitten aus Gummimaterial aufgebaut, diese Zuschnitte werden in einer Presse heißvulkanisiert und bilden dann ein Leckdichtkissen in Rechteckform, das eine leckseitige Kissenwand 20 und eine gleich große leckabgewandte Kissenwand 22 hat. Ziel der Erfindung ist es, diese beiden Kissenwände 20, 22 deutlich unterschiedlich voneinander und speziell für ihre jeweilige Aufgabe beim Abdichten eines Lecks auszubilden: Die leckseitige Kissenwand 20 soll sich beim Aufblasen des Kissens möglichst ungehindert ausbeulen können, damit eine beliebig geformte und verlaufende Wand um den Bereich eines Lecks herum mög lichst gleichmäßig belastet und damit abgedichtet wird. Die leckabgewandte Kissenwand soll sich möglichst wenig deformieren, also ein möglichst starres Widerlager bilden, so daß sich das Leckdichtkissen beim Aufblasen möglichst eng an der schadhaften Wand bleibt und ein möglichst geringes Luftvolumen für das Aufblasen des Leckdichtkissens benötigt wird.

Die beiden Kissenwände 20, 22 begrenzen einen luftdichten Innenraum 24, der über einen Nippel 26 von außen zugänglich ist. In Nähe zweier gegenüberliegender Randbereiche, im allgemeinen den Schmalseiten 28 des Rechtecks, sind Befestigungsteile 30 für Zugelemente 32 (Seile, Gurte, Ketten oder dergleichen) einer Spanneinrichtung angeordnet. Die Spanneinrichtung weist noch Spannelemente, beispielsweise Seilzüge, Ratschen oder dergleichen auf, mittels derer die Zugelemente angezogen und gespannt werden können. Im praktischen Betrieb werden mindestens zwei Zugelemente um den abzudichtenden Behälter bzw. das abzudichtende Rohr herumgelegt und mittels der Spannelemente angezogen.

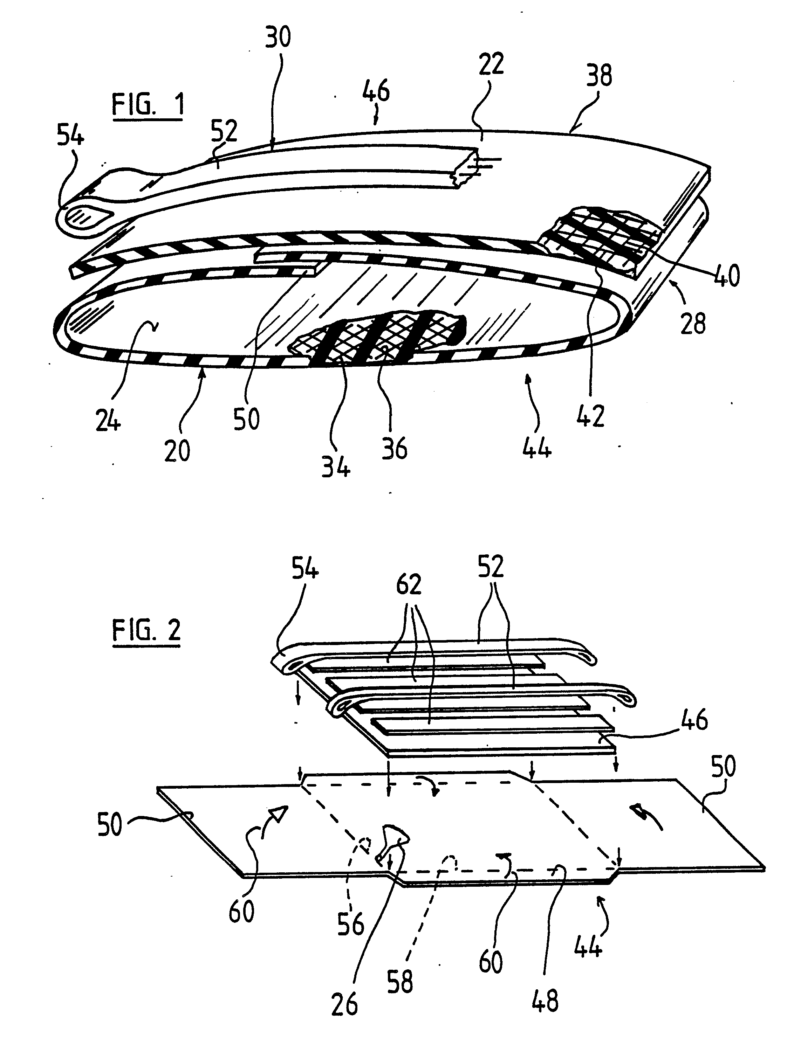

Die Kissenwande 20, 22 sind durch eine innenliegende Armierung aus gleichabständig und parallel zueinander angeordneten, sich kreuzenden, biegsamen Armierungsfäden 34, 36, die die Armierungselemente bilden, armiert. Für jede Kissenwand 20, 22 sind jeweils die zueinander parallelen Armierungsfäden mit einem Bezugszeichen versehen. Die leckseitige Kissenwand ist ausschließlich durch die Armierungsfäden 34 und 36 armiert. Diese beiden Fadenscharen kreuzen sich im Ausführungsbeispiel im rechten Winkel, sie können sich aber auch in beliebigen anderen Winkeln, beispielsweise 60 Grad, kreuzen. Ihre Fadenrichtungen verlaufen so, daß sie einen möglichst großen Winkel mit beiden Rechteckseiten 28, 38 einschließen. Eine weitere Armierung weist diese Kissenwand 20 nicht auf. Die andere Kissenwand, also die längsabgewandte Kissenwand hat dagegen zumindest zwei Sätze Armierungsfäden 40, 42, die parallel zu den Rechteckseiten 28, 38 verlaufen und sich untereinander damit zwangsläufig rechtwicklig schneiden. Die leckabgewandte Kissenwand 22 kann zusätzlich durch Armierüngsfäden in anderer Richtung armiert sein. Im Ausführungsbeispiel nach Fig. 2 ist dies dadurch realisiert, daß der Zuschnitt, der die leckseitige Kissenwand 20 ausbildet und damit - schräg zu den Rechteckseiten 28, 38 verlaufend armiert ist, zugleich mit die leckabgewandte Kissenwand 22 bildet, so daß diese nicht nur durch die Armierungsfäden 40, 42, sondern zusätzlich durch die schräg zu diesen verlaufenden Armierungsfäden 34, 36 armiert ist.

An die Armierungsfäden 34, 36 bzw. 40, 42 werden folgende Anforderungen gestellt: Sie sollen in ihrer Längsrichtungmöglichst nicht dehnbar sein, aber quer hierzu biegsam sein. bevorzugt Armierungsfäden sind Stahlcord, also ein typischerweise in der Reifenindustrie verwendetes, hochflexibles Stahlseil, oder Polyamid, Polyester, Aramid oder dergleichen.

Das in Fig. 1 dargestellte Kissen ist aus einem ersten, im wesentlichen rechteckförmigen Zuschnitt 44 mit schräg verlaufenden Armierungsfäden, 34, 36 und einem zweiten, kleineren, rechteckförmigen Zuschnitt 46 gefertigt, dessen Armierungsfäden 40, 42 parallel zu seinen Rechteckseiten verlaufen. Der erste Zuschnitt hat eine Breite, die im wesentlichen der Breite der Schmalseite 28 entspricht und eine Länge, die etwas größer ist als das zweifache der Langseite 38. Zusätzlich hat dieser Zuschnitt, wie auch aus Fig. 2 ersichtlich ist, seitliche Lappen 48, die in bekannter Weise für die Ausbildung eines luftdichten Innenraums 24 umgeschlagen und mit der gegenüberliegenden Kissenwand durch Vulkanisieren verbunden werden. Der zweite Zuschnitt hat die Abmessungen der Rechteckfläche des Kissens.

Der erste Zuschnitt ist so gefaltet, daß sich die Endbereiche 50 seiner Schmalseiten etwa in der Mitte der leckabgewandten Kissenwand 22 überlappen. Außerhalb dieses Überlappungsbereichs befindet sich der zweite Zuschnitt 46.

Oberhalb dieses zweiten Zuschnitts sind zwei flache Streifen 52 aufgelegt, von denen in Fig. 1 nur einer zu sehen ist. Sie sind in ihrer Längsrichtung armiert und endseitig so umgebogen, daß gegenüber den Schmalseiten 28 des Kissens vorstehende Schlaufen 54 gebildet werden. Jeder Streifen 52 bildet zwei auf gegenüberliegenden Schmalseiten befindliche Schlaufen 54 aus. Diese Schlaufen 54 dienen als Befesti gungsteile für die Zugelemente 32.

Der Aufbau eines derartigen Leckdichtkissens geht aus Fig. 2 hervor. Diese zeigte den ersten Zuschnitt 44, der entlang der gestrichelt angedeuteten Faltlinien 56, 58 und im Sinne der Pfeile 60 zu einem flachen, taschenähnlichen Körper zusammengeklappt wird. Er bildet im wesentlichen die luftdichte Blase, also den Innenraum 24 aus. Seine Endbereiche 50 sind im Gegensatz zum Ausführungsbeispiel nach Fig.1 so bemessen, daß sie beim Zusammenklappen exakt und bündig aneinanderstoßen, also zwischen sich keinen Spalt freilassen, aber sich auch nicht gegenseitig überlappen. Auf die so gebildete Einheit wird über die Berührungslinie der beiden Endbereiche 50 der zweite Zuschnitt 46 gelegt, der die entscheidende Armierung der leckabgewandten Kissenwand 22 trägt. Auf ihn wiederum werden zwei Streifen 52 im gegenseitigen Abstand und parallel zu der Langseite 38 verlaufend aufgelegt. Der Zwischenraum zwischen diesen Streifen 52 und seitlich bis zu den Langseiten 38 wird durch Gummistreifen 62 so aufgefüllt, daß beim späteren Vulkanisierschritt die äußere Oberfläche der leckabgewandten Wand 22 möglichst glatt ist. Das so gebildete Kissen wird dann bei Luftdruckfüllung in einem einzigen Vulkanisierschritt vulkanisiert, dabei verbinden sich die einzelnen Teile miteinander in bekannter Weise. Ein Nippel 26 befindet sich in einer Kissenecke, hinsichtlich seiner Ausbildung und Anordnung wird auf die entsprechende Offenbarung in der europäischen Offenlegungsschrift 157 947 verwiesen.

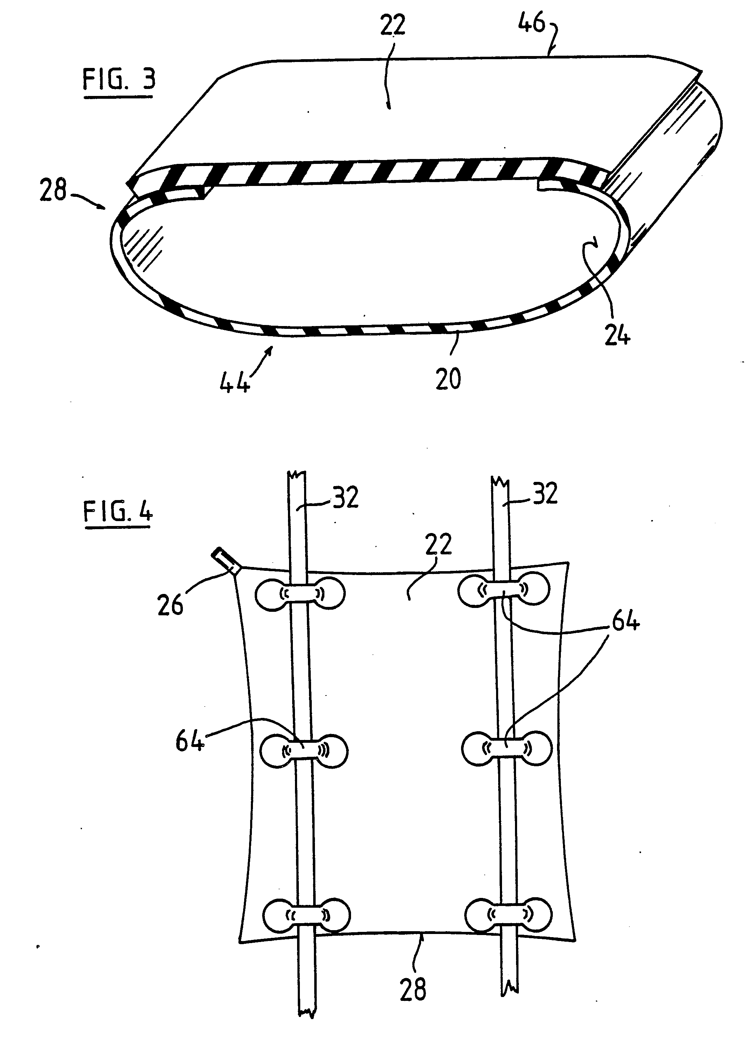

In Fig. 3 ist eine andere Ausbildung des Leckdichtkissens gezeigt. Hier hat der erste Zuschnitt 44 im wesentlichen die Größe einer Kissenwand und bildet praktisch ausschließlich die leckseitige Kissenwand 20. Er hat ähnlich den Lappen 48 an allen vier Rechteckseitgen überstehende Lappen, die der Verbindung mit dem zweiten Zuschnitt 46 dienen. Letzterer hat wiederum die Größe und Form des Kissenrechtecks. Der Innenraum 24 wird zwischen diesen beiden Zuschnitten 44, 46, die zugleich die jeweiligen Kissenwände 22, 20 sind, ausgebildet.

Im Ausführungsbeispiel nach Fig. 4 schließlich sind insgesamt sechs Brücken 64 gezeigt, die außen auf die Oberfläche der leckabgewandten Kissenwand 22 aufgesetzt sind und quer zur Zugrichtung der Zugelemente 32 verlaufen. Sie bilden unter sich einen Durchlaß, damit eine Führung für ein im bezeichneten Ausführungsbeispiel seilförmiges Zugelement 32. Ihre Aufgabe ist es, dieses Zugelement gegen seitliches Verrutschen zu sichern. Das Zugelement 32 kann sich aber in seiner Längsrichtung relativ zur Kissenwand 22 bewegen, das Kissen selbst ist nicht zugbeansprucht. Die Brücken 64 können auch als Ringe ausgebildet sein, die an der leckabgewandten Kissenwand 22 gehalten sind. Andere Ausbildungen als die gezeigte Ausführungsform sind ebenfalls möglich. Entscheidend ist lediglich für die Brücken, daß sie ein seitliches Verrutschen der Zugelemente 32 und damit ein Abrutschen dieser Zugelemente 32 von der Kissenwand 22 verhindern und eine Bewegung der Zugelemente in Längsrichtung dieser Zugelemente freilassen.

**Ansprüche**

1. Leckdichtkissen zum Abdichten schadhafter Wände von Behältern und Rohren, das aus in einer Presse heißvulkanisiertem, armierten, bahnförmigen, vor dem Vulkanisieren unvulkanisiertem Gummimaterial gefertigt ist und eine leckseitige Kissenwand (20) und eine gleich große, leckabgewandte Kissenwand (22) aufweist, die randseitig miteinander in Verbindung stehen und dabei einen luftdichten Innenraum (24) begrenzen, der über einen Nippel (26) von außen zugänglich ist und das an zwei gegenüberliegenden Randbereichen (Schmalseiten 28) Befestigungsteile (30, Schlaufen 54, Brücke 64) für eine den Behälter bzw. das Rohr umgreifende Spanneinrichtung aufweist, dadurch gekennzeichnet, daß beide Kissenwände (20, 22) eine innenliegende Armierung mit sich kreuzenden, biegsamen, linearen Armierungselementen (Armierungsfäden 34, 36; 40, 42) haben, daß die leckseitige Kissenwand (20) ausschließlich mit schräg zu den Rechteckseiten (28, 38) des Kissens verlaufenden Armierungsfäden (34, 36) armiert ist und daß die leckabgewandte Kissenwand (22) parallel zu den Rechteckseiten (28, 38) verlaufende Armierungsfäden aufweist.

2. Leckdichtkissen nach Anspruch 1, dadurch gekennzeichnet, daß die Armierungsfäden (34, 36) der leckseitigen Kissenwand (20) sich im rechten Winkel kreuzen und einen möglichst großen Winkel mit den beiden Rechteckseiten (28, 38) einschließen.

3. Leckdichtkissen nach Anspruch 1 oder 2, dadurch gekennzeichnet, daß die Armierungsfäden (34, 36) der leckseitigen Kissenwand (20) in Diagonalrichtung verlaufen.

4. Leckdichtkissen nach einem der Ansprüche 1 bis 3, dadurch gekennzeichnet, daß die leckabgewandte Kissenwand (22) zusätzlich zu den Armierungsfäden (40, 42) durch in Schrägrichtung zu den Rechteck seiten (28, 38) verlaufende Armierungsfäden (34, 36) armiert ist.

5. Leckdichtkissen nach einem der Ansprüche 1 bis 4, dadurch gekennzeichnet, daß es aus einem ersten Zuschnitt (44), der im wesentlichen rechteckförmig ist und eine der Länge der Schmalseite (28) entsprechende Breite und eine Länge aufweist, die nicht kleiner ist als die zweifache Länge der Langseiten (38) und einem zweiten Zuschnitt (46) aufgebaut ist, der ebenfalls Rechteckform hat und den Rechteckseiten (28, 38) entsprechende Abmessungen aufweist.

6. Leckdichtkissen nach einem der Ansprüche 1 bis 5, dadurch gekennzeichnet, daß die Befestigungsteile (30) als Schlaufen (54) ausgebildet sind, die gegenüber den Schmalseiten (28) vorstehen und aus schmalen, armierten Streifen (52) gebildet sind, die mit der leckabgewandten Kissenwand (22) verbunden sind.

7. Leckdichtkissen nach einem der Ansprüche 1 bis 5, dadurch gekennzeichnet, daß die Befestigungsteile (30) als Brücken (64) ausgebildet sind, von denen mehrere jeweils ein Zugelement (32) übergreifen und seitlich führen und die auf die leckabgewandte Kissenwand (22) aufgesetzt sind.

8. Leckdichtkissen nach einem der Ansprüche 1 bis 7, dadurch gekennzeichnet, daß der Nippel (26) in einer Ecke des Innenraums (24) angeordnet ist.

FIG. 1

FIG. 2

FIG. 3

FIG. 4

| EINSCHLÄGIGE DOKUMENTE | | | EP 88107484.3 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DD - A1 - 219 545 (WILHELM PIECK-UNIVERSITAT) <br> * Gesamt * <br> -- | | F 16 L 55/16 |
| A | GB - A - 2 159 597 (GEOFFREY ASPREY) <br> * Gesamt * <br> -- | | |
| A | US - A - 4 448 218 (VETTER) <br> * Gesamt * <br> -- | | |
| A | US - A - 4 106 428 (MATTHIESSEN) <br> * Gesamt * <br> ---- | | |

**RECHERCHIERTE SACHGEBIETE (Int. Cl.4)**

F 16 L 55/00

Der vorliegende Recherchenbericht wurde für alle Patentansprüche erstellt.

| Recherchenort | Abschlußdatum der Recherche | Prüfer |
|---|---|---|
| WIEN | 01-08-1988 | SCHUGANICH |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82